## Europäisches Patentamt
## European Patent Office
## Office européen des brevets

(11) Veröffentlichungsnummer: **0 339 192**
**A2**

# (12) EUROPÄISCHE PATENTANMELDUNG

(21) Anmeldenummer: **89102272.5**

(22) Anmeldetag: **10.02.89**

(51) Int. Cl.⁴: **B29C 45/58 , F16J 15/56 , F16J 15/48**

(30) Priorität: **29.04.88 DE 3814571**

(43) Veröffentlichungstag der Anmeldung:
**02.11.89 Patentblatt 89/44**

(84) Benannte Vertragsstaaten:
**AT CH ES FR GB IT LI SE**

(71) Anmelder: **Klöckner Ferromatik Desma GmbH**
**Riegeler Strasse 4**
**D-7831 Malterdingen(DE)**

(72) Erfinder: **Stengelin, Ernst**
**Panningerstrasse 17**
**D-7201 Neuhausen(DE)**
Erfinder: **Schatz, Walter**
**Ifflinger Weg 12**
**D-7203 Fridingen(DE)**

(74) Vertreter: **Kiefer, Winfried, Dipl.-Phys.**
**Klöckner-Werke Aktiengesellschaft**
**Patentabteilung Klöcknerstrasse 29**
**D-4100 Duisburg 1(DE)**

(54) **Kolbenspritzgussmaschine.**

(57) Die Erfindung betrifft eine Kolbenspritzgußmaschine zur Verarbeitung wärmehärtbarer Kunststoffmassen, insbesondere von Gummi, mit einem Spritzzylinder und einem darin hinund herbewegbaren Spritzkolben.

Zur besseren Abdichtung des Spritzkolbens wird vorgeschlagen, daß die Dichtungen (20) aus mehreren in einer Ringnut (21) des Spritzkolbens (9) angeordneten aneinander liegenden Dichtringen (20a - 20c) besteht, deren gegenseitige Seitenanlageflächen (27) so gestaltet sind, daß durch den durch die Masse auf die Dichtung (20) vermittelten axialen Druck ein Teil der Dichtringe (20a, 20c) radial nach außen und ein Teil (20b) radial nach innen gepreßt wird.

Fig. 4

## Kolbenspritzgußmaschine

Die Erfindung betrifft eine Kolbenspritzgußmaschine zur Verarbeitung wärmehärtbarer Kunststoffmassen, insbesondere von Gummi, mit einem Spritzzylinder, in den portionsweise gegebenenfalls über eine Plastifizierschnecke Masse gefördert wird, und einen in dem Spritzzylinder hin- und herverschiebbaren Spritzkolben, der die Masse aus dem Spritzzylinder durch eine Spritzdüse in eine Spritzform presst, wobei der Kolbenmantel mit einer unter dem Druck der Masse elastisch zur Zylinderinnenwand hin spreizbaren Dichtung ausgestattet ist.

Als Spritzmaterialien für diese Spritzeinheit kommen alle Viskosematerialien infrage, die spritzfähig sind. Dazu gehören alle Viskosenthermoplaste und Elastomere, also Kunststoffe und insbesondere auch Gummi. Bei Gummi sind besonders hohe Drücke anzuwenden, weil dieses relativ schlechte Fließeigenschaften hat. Nach dem Stand der Technik ist bekannt, daß der Kolben derartiger Spritzzylinder zur Abdichtung des Druckraumes nach außen mit einer oder mehreren Dichtungen versehen werden muß.

In der FR-OS 73 32 411 wird ein Injektionskolben für thermohärtbare und thermoplastische Spritzmaterialien und insbesondere für Elastomere beschrieben, der an seinem Randumfang mit einer ringförmigen Lippe versehen ist, die nach vorn, d.h. in den Druckraum weist, und im engen Kontakt mit der Innenfläche des Zylinderraumes steht. Diese Lippe spielt die Rolle einer Abstreifvorrichtung, übt jedoch auch eine gewisse Dichtungsfunktion aus.

Eine entsprechende Konstruktion ist aus der DE-AS 15 79 020 bekannt, bei der die Dichtlippe aus starrem, reibungsminderndem Material besteht und in eine Schneide ausläuft, die schräg zur Zylinderinnenwand gerichtet ist.

Diese Konstruktionen haben jedoch den Nachteil, daß die sogenannte Dichtlippe, welche aus Stahl bzw. starrem Material besteht, nur begrenzt elastisch ist, d.h. sich den jeweiligen Spritzdrücken nur begrenzt anpassen kann. Bei niedrigen Drücken (300 bis 400 bar) wird keine Anlage der Dichtlippe erreicht und somit auch keine Dichtwirkung. Ein wesentlicher Nachteil dieser Konstruktion besteht auch darin, daß die Spritzgenauigkeit nicht mehr gewährleistet ist, weil durch das Austreten von Spritzmaterial aus dem Spritzzylinderdruckraum die Menge des Spritzmaterials für den Spritzkörper nicht mehr erhalten bleibt. Bei hohen Spritzdrücken, die bis zu 3000 bar betragen können, wird die relativ kleine Berührungsfläche der Lippe zu stark an die Zylinderwand gedrückt, was zu Fresserscheinungen und zum Ausfall des gesamten Systems führen kann.

Der Erfindung liegt die Aufgabe zugrunde, eine Kolbenspritzgußmaschine der eingangs genannten Art dahingehend weiterzuentwickeln, daß der Kolben auch bei Drücken in der Größenordnung von etwa bis zu 3000 bzw. 4000 bar im Spritzzylinderraum noch nach außen so abgedichtet ist, daß ein Spritzmitteldurchtritt verhindert wird.

Diese Aufgabe wird durch die Merkmalskombimation nach Anspruch 1 gelöst. Vorteilhafterweise wird nach dem in der Ölhydraulik etwa bekannten Prinzip der Dachmanschettendichtung die Dichtung so aufgebaut, daß deren Teile (Dichtringe) mit wachsendem Druck im Spritzraum sowohl mehr radial nach außen als auch nach innen gepreßt werden, was mit einem Gleiten der gegenseitig aneinanderliegenden Anlage bzw. Abstützflächen einhergeht. Die axial auftretende Druckkraft liefert Kraftkomponenten sowohl radial nach außen als auch radial nach innen, je nach Seitenflächenneigung des Dichtringes.

Im einfachsten Fall kann die Dichtung aus drei Dichtringen bestehen, wobei nach einer Weiterbildung der Erfindung der Querschnitt der mittleren Dichtung bzw. - bei mehr als drei Dichtungen - der mittleren Dichtungen annähernd ein gleichschenkliges Trapez ist. Im Idealfall ist die die Dichtung aufnehmende Ringnut im Querschnitt rechtwinklig, wobei die jeweils den Querschnittenseitenflächen gegenüberliegenden Dichtungsseitenflächen parallel verlaufen bzw. dort anliegen. Die übrigen Seitenflächen der im Querschnitt vorzugsweise trapezförmigen Dichtringe, die jeweils als aufeinandergleitbare schiefe Ebene ausgebildet sind, haben einen Neigungswinkel zur Kolbenstangentialebene von 30 bis 60° bzw. 150 bis 120°.

Um ein Herausspringen der Dichtringe aus der Ringnut zu verhindern, besitzt die Ringnut eine Tiefe von 2 bis 3 mm und/oder die Dichtringe schließen mit ihrer äußeren Fläche bündig mit der Kolbenzylindermantelfläche ab.

Wählt man die sich im Querschnitt ergebende Basis der Trapeze 5 bis 7 mm lang und/oder die gegenüberliegende Seite mit 1 bis 2 mm entsprechend kurz, so ergeben sich zufriedenstellende Gleitflächen der aneinanderliegenden Ringdichtungen.

Wie bereits oben erwähnt, können die Dichtringe im Querschnitt von der idealen Trapezform abweichen, etwa dadurch, daß deren Kanten eine Fase aufweisen.

Es hat sich ferner als zweckdienlich herausgestellt, wenn die Dichtung in bezug auf die mittlere Kolbenflächenmantelnormale spiegelsymmetrisch aufgebaut ist, d.h. in bezug auf die mittlere Dichtung jeweils gleich viel Ringdichtungen gleicher Ausgestaltung zur Spritzdüse hin bzw. in entgegengesetzter Richtung angeordnet sind.

Was das Material für die Dichtringe betrifft, so kann auf die nach dem Stand der Technik bekannten Dichtmaterialien zurückgegriffen werden, vorzugsweise sollten die Dichtringe jedoch aus einem Thermoplast bestehen, der eine hohe Druckbelastbarkeit bis zu 3000 kg/cm$^2$, vorzugsweise 4000 kg/cm$^2$, einen geringen Reibungskoeffizient und eine Dauertemperaturbeständigkeit bei 200 °C aufweist.

Zur Stabilisierung könnten die einzelnen Dichtringe Füllstoffe wie Graphit, Glas- oder Kohlefasern aufweisen.

Um die Druckwirkung des in dem Spritzraum anstehenden Materials besser auf die Dichtung geben zu können, gibt es nach einer weiteren Ausgestaltung der Erfindung folgende Möglichkeiten: Zum einen kann auf der der Spritzdüse zugewandten Seite der Ringnut eine mit der Ringnut in Verbindung stehende umlaufende Aussparung vorgesehen sein, die vorzugsweise eine geringere Tiefe als die Ringnut für die Dichtung hat, etwa zwischen 0,1 und 0,5 mm beträgt. Zum anderen kann jedoch zusätzlich zur umlaufenden Aussparung auch der der Spritzdüse am nächsten liegende Dichtring so eingelegt sein, daß zwischen seiner vorderen Seitenfläche und der Ringnutenseitenwand ein Spiel von vorzugsweise 0,2 bis 0,5 mm besteht. Diese Ausbildung gewährleistet, daß Spritzmaterial ringums des Kolbens bis zur Dichtung vordringen kann und dort eine ausreichende Angriffsfläche findet.

Nach einer weiteren Ausgestaltung der Erfindung ist die Flanke der Aussparung auf der der Spritzdüse zugewandten Seite abgeschrägt, vorzugsweise in einem Abschrägungswinkel zwischen 30 und 60 °, was die Reibung des hier vorbeifließenden Spritzmediums erheblich verringert.

Insgesamt besitzt die erfindungsgemäße Vorrichtung den Vorteil, daß nicht nur bei erstmaliger Inbetriebnahme eine optimale Dichtwirkung erzielt wird, sondern daß diese Dichtwirkung bei praktisch verschleißbaren Dichtungen lange anhält. Sollten nach Beendigung der weit über den Stand der Technik hinausgehenden Standzeiten der Dichtungen diese verschlissen sein, so lassen sich die Dichtungen leicht austauschen und preisgünstig ersetzen. Die gute Dichtwirkung ermöglicht zudem ein dosierungsgemäßes Spritzen, da kein Spritzgut mehr durch Entweichen über die Dichtungen verloren geht. Insbesondere können die erfindungsgemäßen Dichtungen extrem hohen Drücken standhalten.

Ein Ausführungsbeispiel der Erfindung ist in den Zeichnungen dargestellt und soll im folgenden näher erläutert werden.

Es zeigen:

Fig. 1 einen Längsschnitt durch die Spritzeinheit mit Injektionskolben und Plastifizierschnecke,

Fig. 2 einen Längsschnitt durch eine vergrößerte Darstellung des Spritzkolbens gemäß Fig. 1,

Fig. 3 eine vergrößerte Darstellung des Details A nach Fig. 2 und

Fig. 4 ein Ausführungsbeispiel für die erfindungsgemäße Anordnung von drei Dichtringen.

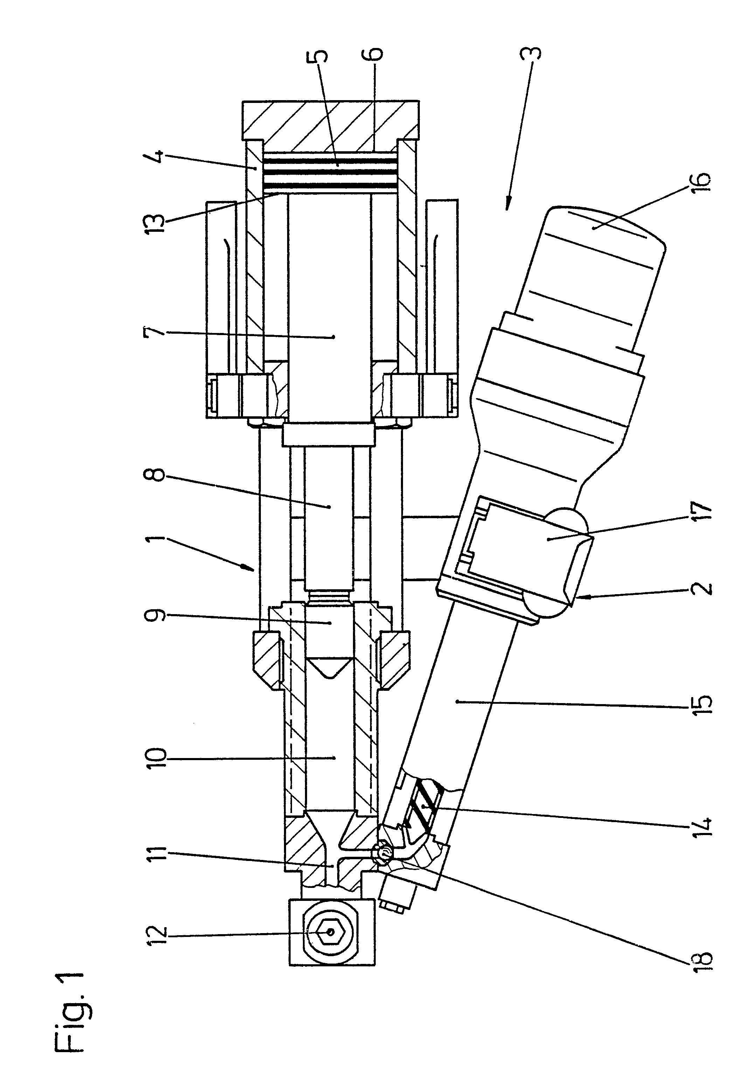

Die in Fig. 1 darstellte Spritzeinheit 3 besteht aus dem Spritzzylinder 1 und der Plastifiziervorrichtung 2. In dem Gehäuse 4 des Spritzzylinders ist ein Hydraulikkolben 5 angeordnet, der im vorliegenden Fall ein doppelt wirkender Kolben ist, der beidseitig beaufschlagbar ist. Bei der in Fig. 1 dargestellten Stellung befindet sich der Kolben in der rechten Endstellung. Wird dieser Kolben 5 auf seiner großen Kolbenfläche 6 druckbeaufschlagt, so wird er in dem Gehäuse 4 nach links bewegt. Diese Bewegungen des Kolbens 5 werden über die Kolbenstangen 7 und 8 auf den Spritzkolben 9 übertragen, der in dem Spritzzylinderraum 10 hin- und herbewegbar ist. Der Spritzzylinderraum 10 ist ferner über einen Kanal 11 mit einer Spritzdüse 12 verbunden, von der aus das Spritzmaterial in eine nicht dargestellte Spritzform gefördert werden kann. Befindet sich der Kolben in der (nicht dargestellten) linken Endstellung nach Beendigung des Spritzvorganges, kann durch Druckbeaufschlagung der Ringfläche 13 des Kolbens 5 der Kolben zur Bewegung in die rechte Endstellung veranlaßt werden.

Die Plastifiziereinheit 2 besteht im wesentlichen aus einer Schnecke 14, die in einem Gehäuse 15 umläuft und von einem Motor 16 angetrieben wird. Das Spritzmaterial wird in eine Einzelöffnung 17 gegeben, wonach es durch Erwärmungen und Kneten mit Hilfe der Plastifizierschnecke 14 in eine spritzfähige Konsistenz bringbar und dann über das Rückschlagventil 18 dem Spritzzylinderraum zugeführt werden kann. Konstruktionsgemäß erfolgt diese Zuführung jeweils portionsweise, und zwar entsprechend der Menge, die für den zu fertigenden Spritzling benötigt wird. Der Spritzkolben 9 fördert die Spritzmaterialportion dann über die Spritzdüse 12 in die Spritzform (nicht dargestellt).

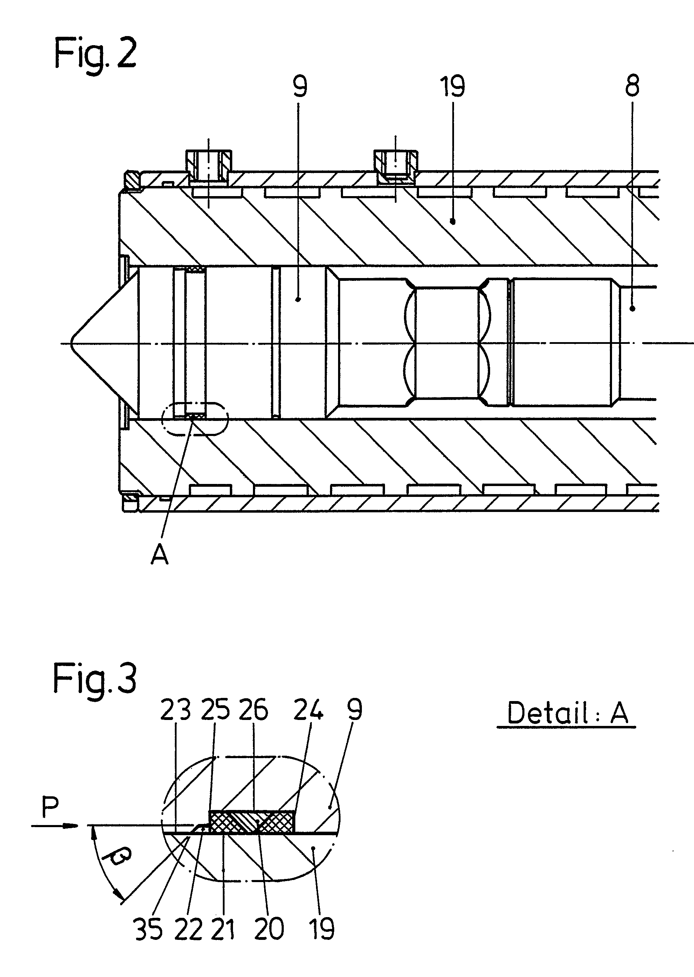

Zur Abdichtung des Spritzkolbens 9, der nach der vergrößerten Darstellung in Fig. 2 in dem Gehäuse 19 geführt wird, sind ringförmige Dichtungen 20 vorgesehen, die als Detail A in Fig. 3 dargestellt sind.

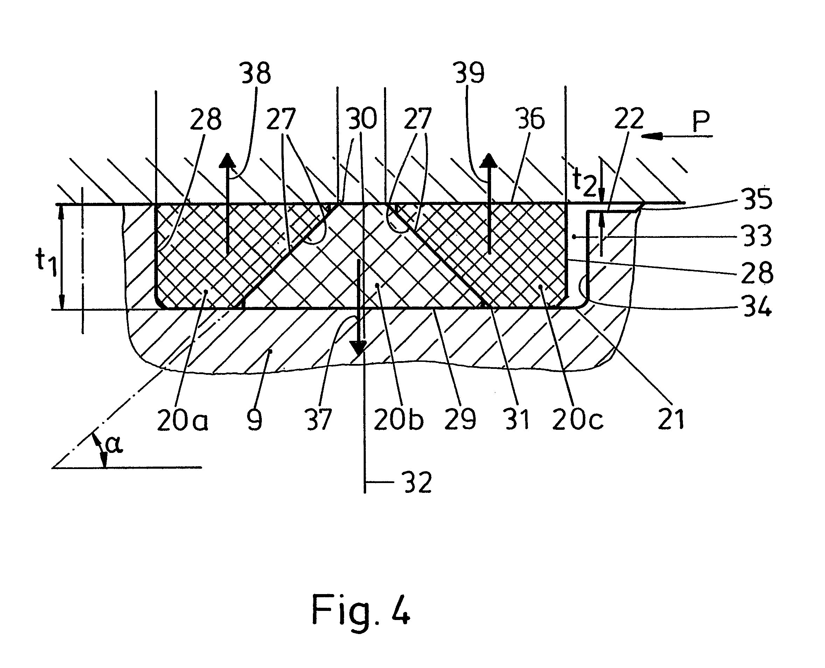

Auf der Seite des Druckzylinderraumes 10 (siehe Fig. 1) ist die Ringnut 21 für eine Dichtung 20 mit einer umlaufenden Aussparung 22 versehen, deren Tiefe wesentlich geringer ist als die Tiefe der Ringnut 21 für die Dichtung 20. Weitere Einzelheiten sind in nochmaliger Vergrößerung in Fig. 4 dargestellt.

EP 0 339 192 A2

Hiernach besteht jede der Dichtungen 20 aus drei Dichtringen 20a, 20b und 20c, deren Seitenflächen 27 als gleitfähige schiefe Ebenen aneinander liegen. Die beiden äußeren Dichtringe 20a und 20c besitzen jeweils parallel zur Flächennormale 20 stehende Seitenwände 28 und liegen spiegelsymmetrisch zum mittleren Dichtring 20b, der im Querschnitt eine gleichschenklige Trapezform besitzt. Die Basis 29 dieses Trapezes liegt auf dem Ringnutgrund auf, während die parallel gegenüberliegende ringförmig verlaufende Mantelfläche 30 bündig mit der Kolbenmantelfläche abschließt. Die Basis 29 hat etwa eine Länge von 6 mm, während die gegenüberliegende Strecke 30 etwa 1 mm lang ist. Die Querschnittsform der beiden außenliegenden Dichtringe 20a und 20c ist die eines asymmetrischen rechtwinkligen Trapezes, deren längere Basis 36 von ca. 4,2 mm jeweils bündig mit dem Streckenstück 30 bzw. der Kolbenmantelfläche abschließt. Die Randbereiche (Kanten) der aneinander liegenden Seitenflächen 27 besitzen jeweils eine Fase 31. Die Tiefe $t_1$ der Ringnut 21 beträgt 2,5 mm, während die Tiefe $t_2$ der umlaufenden Ausnehmung 22 0,2 mm beträgt. Die Dichtung 20 ist so eingelegt, daß zwischen der der Spritzdüse 12 zugewandten Seitenfläche der Ringdichtung 20c und der gegenüberliegenden Seitenwand der Ausnehmung 21 ein Spiel 33 von 0,5 mm gelassen ist. Ferner besitzt die umlaufende Ausnehmung 22 eine abgeschrägte Flanke 35, wobei der Abschrägungswinkel ß 30 bis 60 ° beträgt. Der aus Fig. 4 ersichtliche Trapezwinkel α liegt bei 30 bis 60 bzw. 120 bis 150 °.

Die erfindungsgemäße Wirkung der Düse wird anhand der Figuren 3 und 4 erläutert. In Figuren 3 und 4 ist die Richtung, in der das Spritzmaterial Druck ausübt, durch ein mit P gekennzeichneten Pfeil veranschaulicht. Fließt das Spritzmedium in Richtung des Pfeiles P, so wird zunächst die Nut 22 und anschließend der durch das Spiel 33 gegebene Raum 25 aufgefüllt, wodurch die Dichtung 20 in Pfeilrichtung zusammengedrückt wird und an der Stirnwand 24 der Ringnut 20 mit hohem Druck anliegt. Das auf die Seitenfläche ringsum drückende Spritzgußmaterial führt dazu, daß schließlich der Dichtring 20b in Richtung des Pfeiles 37 und die Dichtringe 20a und 20c in Richtung der Pfeile 38 und 39 gedrückt werden, was durch Aufeinandergleiten der Flächen 27 (schiefer Ebenen) geschieht. Die durch die Pfeile 37 bis 39 gekennzeichneten Kräfte werden durch den Winkel α bestimmt.

Als Material für den Dichtring wurde ein Thermoplast verwendet, der folgende mechanische Eigenschaften hatte:

| Dichte | 1,3 g/cm³ |
| Schmelzpunkt ≥ | 300 °C |
| Wasseraufnahme | 0,5 % |
| Ölaufmenge | 0,015 % |
| Zugfestigkeit bei 23 °C | etwa 90 N/mm² |
| bei 150 °C | etwa 35 N/mm² |
| bei 250 °C | etwa 12 N/mm² |
| Reißdehnung bei 23 °C | 50 % |
| Biege-E-Modul bei 23 °C | oberhalb von 3500 N/mm² |
| bei 150 °C | > 2000 N/mm² |
| bei 250 °C | 300 N/mm² |
| Kegeldruckhärte bei 23 °C | 120 N/mm² |
| Wärmeausdehnungskoeffizient bei 20 bis 100 °C | etwa 4, 7 x 10⁻⁵ K⁻¹ |

**Ansprüche**

1. Kolbenspritzgußmaschine zur Verarbeitung wärmehärtbarer Kunststoffmassen, insbesondere von Gummi, mit einem Spritzzylinder (1), in den portionsweise gegebenenfalls über eine Plastifizierschnecke Masse gefördert wird, und einen in dem Spritzzylinder (1) hin- und herverschiebbaren Spritzkolben (9), der die Masse aus dem Spritzzylinder (1) durch eine Spritzdüse (12) in eine Spritzform presst, wobei der Kolbenmantel mit einer unter dem Druck der Masse elastisch zur Zylinderinnenwand hin spreizbaren Dichtung (20) ausgestattet ist,
dadurch gekennzeichnet,
daß die Dichtung (20) aus mehreren in einer Ringnut (21) des Kolbens (9) angeordneten aneinanderliegenden Dichtringen (20a - c) besteht, deren gegenseitige Anlage- bzw. Abstützseitenflächen (27) so gestaltet sind, daß durch den durch die Masse auf die Dichtung (20) vermittelten axialen Druck ein Teil der Dichtringe (20a,c) radial nach außen und ein Teil (20b) radial nach innen gepreßt wird.

4

2. Kolbenspritzgußmaschine nach Anspruch 1,
dadurch gekennzeichnet,
daß die Dichtung (20) aus drei Dichtringen (20a - c) besteht.

3. Kolbenspritzgußmaschine nach Anspruch 1 oder 2,
dadurch gekennzeichnet,
daß der Querschnitt des mittleren Dichtringes (20b) bzw. der mittleren Dichtringe annähernd ein gleichschenkliges Trapez ist.

4. Kolbenspritzgußmaschine nach einem der Ansprüche 1 bis 3,
dadurch gekennzeichnet,
daß die Ringnut (21) des Spritzkolbens (9) im Querschnitt rechtwinklig ist und die außen liegenden Ringdichtungen (20a,c) diesem Querschnitt angepaßte, senkrecht zum Kolben verlaufende Seitenflächen (28) aufweisen.

5. Kolbenspritzgußmaschine nach einem der Ansprüche 1 bis 4,
dadurch gekennzeichnet,
daß die aneinanderliegenden Anlageflächen (27) zur jeweiligen Kolbenstangentialebene einen Winkel ($\alpha$) von 30° - 60° bzw. 150 ° - 120 ° bilden.

6. Kolbenspritzgußmaschine nach einem der Ansprüche 1 bis 5,
dadurch gekennzeichnet,
daß die Ringnut (21) des Kolbens (9) eine Tiefe ($t_1$) von 2 bis 3mm hat und/oder die Dichtringe (20a - c) mit ihrer äußeren Fläche bündig mit der Kolbenzylindermantelfläche abschließen.

7. Kolbenspritzgußmaschine nach einem der Ansprüche 1 bis 6,
dadurch gekennzeichnet,
daß die sich im Querschnitt ergebende Basis (29) der Trapeze 5 - 7mm und/oder die gegenüberliegende Seite (30) 1 - 2mm lang ist.

8. Kolbenspritzgußmaschine nach einem der Ansprüche 1 bis 7,
dadurch gekennzeichnet,
daß die Kanten (21) der Dichtringe (20a - c) eine Fase aufweisen.

9. Kolbenspritzgußmaschine nach einem der Ansprüche 1 bis 8,
gekennzeichnet durch
einen in bezug auf eine Kolbenflächenmantelnormale (32) spiegelsymmetrischen Aufbau.

10. Kolbenspritzgußmaschine nach einem der Ansprüche 1 bis 9,
dadurch gekennzeichnet,
daß die Dichtringe (20a - c) aus einem Thermoplast bestehen, der folgende mechanische Eigenschaften aufweist:

    a) eine hohe Druckbelastbarkeit bis zu 3000 kg/cm², vorzugsweise 4000 kg/cm²

    b) gute Gleiteigenschaften bzw. einen geringen Reibungskoeffizienten und

    d) eine Dauertemperaturbeständigkeit bei 200 °C.

11. Kolbenspritzgießmaschine nach Anspruch 10,
dadurch gekennzeichnet,
daß die Thermoplaste Füllstoffe wie Graphit, Glas- oder Kohlefaser aufweisen.

12. Kolbenspritzgußmaschine nach einem der Ansprüche 1 bis 11,
dadurch gekennzeichnet,
daß auf der der Spritzdüse (12) zugewandten Seite der Ringnut (21) eine mit der Ringnut (21) in Verbindung stehende umlaufende Aussparung (22) vorgesehen ist.

13. Kolbenspritzgußmaschine nach Anspruch 12,
dadurch gekennzeichnet,
daß zusätzlich zur umlaufenden Aussparung (22) der der Spritzdüse (12) am nächsten liegende Dichtring (20a) mit einem Spiel (33),vorzugsweise von 0,2 bis 0,5mm zur Ringnutenseitenwand (34) anliegt.

14. Kolbenspritzgußmaschine nach Anspruch 12 oder 13,
dadurch gekennzeichnet,
daß die Tiefe ($t_2$) der ringförmigen Aussparung (22) geringer als die Tiefe ($t_1$) der Ringnut (21) für die Dichtung ist, vorzugsweise zwischen 0,1 und 0,5mm liegt.

15. Kolbenspritzgußmaschine nach einem der Ansprüche 12 bis 14,
dadurch gekennzeichnet,
daß die Flanke (35) der Aussparung (22) auf der der Spritz düse (12) zugewandten Seite abgeschrägt ist.

5

16. Kolbenspritzgießmaschine nach Anspruch 15,
dadurch gekennzeichnet,
daß der Abschrägungswinkel (ß) zwischen 30 und 60° liegt.

Fig. 1

EP 0 339 192 A2

EP 0 339 192 A2

# Fig. 2

9    19    8

A

# Fig. 3

23 25 26   24   9

P

β

35 22 21 20 19

Detail: A

Fig. 4